# EUROPEAN PATENT SPECIFICATION

(11) **EP 3 800 766 B1**
(45) Date of publication and mention of the grant of the patent: **03.04.2024**
(21) Application number: 20199602.2
(22) Date of filing: 01.10.2020
(51) Int. Cl.: H02J 50/70, H02J 50/10, H01F 27/36, H01F 38/14, H04B 15/02

(54) **SHIELDED INDUCTIVE POWER TRANSFER SYSTEMS**
ABGESCHIRMTE INDUKTIVE ENERGIEÜBERTRAGUNGSSYSTEME
SYSTÈMES DE TRANSFERT D'ÉNERGIE INDUCTIFS BLINDÉS

(30) Priority: 03.10.2019 NL 2023959
(43) Date of publication of application: 07.04.2021
(73) Proprietor: Prodrive Technologies Innovation Services B.V., 5692 EM Son en Breugel (NL)
(72) Inventor: HAGENAAR, Michel Alexander, 5692 EM Son (NL); VOS, Danny, 5692 EM Son (NL); VRIJSEN, Nilles Henricus, 5692 EM Son (NL); LEMMEN, Erik, 5692 EM Son (NL); VAN DER KANT, Tom Adrianus Henricus, 5692 EM Son (NL)
(74) Representative: IP Maison

(56) References cited:
- WO-A1-2019/034594
- US-A1- 2014 070 763
- US-A1- 2017 085 134
- US-A1- 2018 109 132
- US-A1- 2018 124 959

## Description

### Technical field

The present invention relates to a shield for inductive power transfer systems in general, to inductive power transfer systems, such as for charging electric vehicles, comprising such shields in particular.

### Background art

Electrical products radiate electric fields and magnetic fields into the environment outside the product boundaries. Especially, products for high frequency applications with switching power converters require measures to limit the radiated field emission. These radiated electric fields and magnetic fields can interfere with other products, which can harm the functionality of other electronic products which is prevented worldwide by putting limits on the amount of allowed radiated electric and magnetic fields. The emission of electrical products can be reduced by applying filters. The disadvantage of this solution is that these additional components add significant costs, complexity and volume to the product. It is often less expensive to add shielding to lower the radiated fields by means of providing a sheet of electrically conducting material covering the electric parts and forming a Faraday shield.

Inductive power transfer systems, such as wireless charging systems for electric vehicles, are intrinsically systems that radiate electromagnetic fields of significant strength, which without additional measures would substantially comprise emitted fields with frequencies in the kHz, MHz and GHz range due to higher harmonics.

On the one hand, to avoid interference with other electrical equipment it is required to shield the environment from the generated electric field in general, and from the frequencies above 100 or 150 kHz specifically. Typically, the environment does not need to be shielded from magnetic fields associated with these higher harmonics, since the relatively low magnetic field resulting from the harmonics of the power transfer frequency, does not contribute significantly to the risk of excessive heating, shocks, burns, or surface charge effects.

On the other hand, for efficient inductive power transfer from a primary side to a secondary side it is required that the magnetic field generated by a primary coil can reach a secondary coil with low losses. Hence, it is important for inductive power transfer systems that the magnetic field can be transferred with minimal losses, while the environment is maximally shielded from the electric field in general and for the higher frequencies, such as the higher harmonics, in particular.

In such situations a shield comprising a sheet of electrical conducting material may effectively block the electric field. However, the disadvantage of such a shield is that it would interfere with an uninterrupted and thus efficient passage of the magnetic field that is intended to transfer the power, because the generated magnetic field induces eddy currents in the electrically conductive material. These eddy currents will result in an energy loss due to the impedance of the current loop in the conductive material and the magnetic field generated by the eddy currents themselves can oppose the magnetic field generated by the current in the primary and/or secondary coil.

Frequency selective shields for shielding the higher harmonics of electromagnetic fields are known in the art. However, the disadvantage of these shields is that they block or attenuate both the electric and magnetic field simultaneously, while the magnetic field is required for the power transfer.

Document US2017/0085134 A1 discloses a wireless transmitting power apparatus comprising a coil which generates magnetic field. A metal sheets acts as electromagnetic shield and extends over width and length of the coil. The slots are configured to partially cancel eddy currents generated in the first metal sheet via the magnetic field.

### Summary of the invention

It is an object of the invention to provide a shield for an inductive power transfer system that solves one or all of the disadvantages of embodiments according to the prior art.

The object of the invention is achieved by providing a shielded inductive power transfer unit according to the appended claims.

The benefit of a shielded inductive power transfer unit for charging electric vehicles comprising a winding of a first coil arranged for power transfer and a shielding member arranged for covering at least a part of a first surface of the first coil in a direction of power transfer, wherein the shielding member comprises a plurality of spaced apart, elongate electrically conductive strips arranged for spanning at least a part of a winding of the first coil and wherein each of the plurality of elongate electrically conductive strips define a longitudinal axis, which longitudinal axis has a directional component substantially perpendicular to or is substantially perpendicular to the tangent of the part of the winding, is that the plurality of conductive strips jointly can capacitively couple with the first coil, thereby providing a frequency selective shield for the electric field. Furthermore, the strips with their corresponding slits prevent significant eddy currents to be generated in the shield that could result in power transfer losses. Aligning the conductive strips with respect to the tangent (e.g. perpendicular to) of the part of the winding spanned by the conductive strips has the advantage that it significantly improves power transfer efficiency, because the current in the conductive strips travels along the flow direction of the current in the coil and thus the limited width of the elongate conductive strips.

The plurality of elongate conductive strips comprises at least a first set of elongate conductive strips being electrically interconnected and arranged for forming a pattern, such as a comb-like pattern. Such interconnected conductive strips allow connecting the plurality of strips to a single terminal, for instance providing a fixed potential or a current source/sink. For example, the plurality of strips is connected to ground or protective earth, thereby providing a grounded shield that allows safely touching the power transfer unit without the hazard of an electric shock or an electrostatic discharge. Furthermore, it prevents an electric potential to be induced in an object in the vicinity of the power transfer unit, which could result into an electrostatic discharge that could even occur after power transfer has stopped, or into an unintended or unexpected leakage current. In a beneficial embodiment the plurality of conductive strips is interconnected in a pattern such as a comb-like pattern. This provides a relatively simple planar structure, wherein the sides of adjacent strips are essentially equidistant or parallel.

Advantageously, the plurality of elongate conductive strips comprises at least a second set of elongate conductive strips being electrically interconnected and arranged for forming a comb-like pattern. Having multiple sets of interconnected conductive strips is an effective measure to reduce eddy currents in the shielding member. In particularly beneficial embodiment, the conductive strips of the second set interleave the conductive strips of the first set, for instance forming a set of interleaved combs. Such an embodiment allows for a simple manufacturing process of the shielding member, wherein a meandering non-conductive pattern having a uniform width can be drawn in a conductive layer. The patterns can for instance be provided on a printed circuit board, which allows manufacturing in an automated manner at a relatively low cost, while providing a high degree of accuracy.

Typically, inductive power transfer units comprise a planar first coil configured for power transfer with a remote planar second coil. The planes of both coils are advantageously essentially parallel and sufficiently overlap in a direction perpendicular to the planes. It may be advantageous to arrange the shielding member substantially perpendicular to a first winding axis of such a first coil, which is typically a side of the coil that radiates a large part and, in some situations, the largest part of the emitted field. For other configurations, it may be beneficial to arrange the shielding member to cover at least a part of the surface of the first coil in a main direction of power transfer (e.g. a side of the first coil configured for facing a second coil of another power transfer unit during power transfer).

The first coil typically defines a substantially void central area about the first winding axis. It may be beneficial to leave a volume overlapping the central area essentially devoid of conductive shielding material, such as elongate conductive strips of the shielding member, because it may improve the power transfer, while the electric field remains blocked or reduced. This can be achieved because the distribution of the electric and magnetic field strength is different. The electric field strength is typically highest above the windings of the first coil, where capacitive coupling by the shielding member is still provided. The magnetic field strength on the other hand may be (partly) shifted towards the center of the coil (e.g. by the shape of magnetic permeable materials close to the coil such as ferrite, iron, etc.), where no or less shielding is provided by electrically conductive material in the form of strips or other patterns to improve the power transfer. Furthermore, it reduces costs because less conductive shielding material (e.g. copper) is used.

Preferably, the plurality of conductive strips define a band (e.g. an annular area) arranged for running all along the winding. Advantageously, the first coil defines a substantially void central area about the first winding axis (e.g. enclosed by an inner winding of the first coil), wherein an inner area of the band overlapping the central area of the first coil is essentially void of electrically conductive shielding material. Preferably, a center of the inner area of the band and the first winding axis substantially coincide. Such embodiments have the benefit of providing a shield for the electric field where the electric field strength is highest, while not impeding magnetic coupling in the more central region (e.g. the inner part of the band). Advantageously, such a band comprises at least two non-conducting interruptions along the band defining at least two regions, preferably at least four non-conducting interruptions along the band defining at least four regions. Preferably, each region defines a central angle of at most substantially 180 degrees, more preferably each region defines a central angle of at most substantially 90 degrees.

Adjacent elongate strips are arranged at a first distance (e.g. a slit width. On the first hand, the slit width may be configured to be relatively large, because this minimizes the losses due to the proximity effect of currents present in adjacent strips. On the other hand, a relatively small slit width will more effectively attenuate the electric field at the wavelength of the higher frequency (MHz - GHz) range, and exposes the conductive strips to a more homogeneous electric field, which is beneficial for blocking the electric field. For instance, in an advantageous embodiment the slit width is between 0,05 mm and 2,0 mm, preferably between 0,1 mm and 1 mm for frequencies between 20 kHz to 150 kHz (e.g. 85 kHz).

To reduce losses caused by eddy currents, it may be beneficial when opposing sides or edges of the elongate strip in a plane of the shielding member (e.g. a width) are arranged at a second distance from one another less than 3 mm, preferably less than 2 mm, preferably less than 1 mm for instance for a shielding member comprising conductive material substantially made from copper and being used for shielding a first coil operated at frequencies between 20 to 150 kHz (e.g. 85 kHz). In general, it is preferred that the width is less than 3 times the skin depth.

Alternatively or additionally, opposing sides or edges of the elongate strip in a direction substantially perpendicular to a plane of the shielding member (e.g. a thickness) may be arranged at a third distance from one another being configured for limiting or reducing the losses in the shield (e.g. caused by eddy currents) as a result of. For instance, the third distance is at least as large as the skin depth of a field generated by the first coil. The skin depth can correspond to an excitation frequency of the first coil (e.g. the automotive standard between 80 and 90 kHz), such as a resonance frequency (e.g. at 85kHz the skin depth of copper is approx. 220 µm). Typically, it is advantageous for the strip to have a relatively large thickness (e.g. at least one time, preferably at least two times the skin depth) in case the width of the strip is significantly larger than the skin depth (>~8x the skin depth). However, in case the width of the strip is smaller than ~5x the skin depth, it is advantageous to decrease the thickness of the strip to a fraction of the skin depth (e.g. at most one time the skin depth, preferably smaller than a half, or a fifth, or a tenth of the skin depth). Both effects can be correlated to the impedance for a current flowing in the separate conductive strips. The wider the strip, the larger the area enclosed by the current flow, which increases the inductance of the flow more than the resistance of the flow. Therefore, the impedance tends to become inductive resulting in higher losses when the resistance is increased (the copper thickness is reduced). While when the area enclosed by the current flow is relatively small the impedance of the current is mainly resistive, and hence, a higher resistance (smaller thickness) will reduce the current such that the losses in the shield are decreased.

Advantageously, the power transfer unit can comprise a power supply for driving the coil configured to supply a power signal to the first coil having an excitation frequency. Advantageously, the first coil forms part of a resonant (LC) circuit, i.e. the first coil can be a resonator coil. In the latter case, the frequency of the power signal generated by the power supply advantageously corresponds to the resonance frequency of the resonant circuit.

A shielded inductive power transfer unit according to the invention may further comprise a layer of non-conductive magnetic material such as ferrite covering a second surface of the first coil opposite to the first surface. Such a layer can shape the magnetic field and diverts it towards another power transfer unit. Preferably, a cooling body is arranged at a surface of the non-conductive magnetic material opposite to the surface exposed to the second surface. Such a cooling body therefore is typically arranged at a side of the power transfer unit opposite to the side exposed to the air gap between two power transfer units, e.g. near the surface arranged for mounting the power transfer unit on a vehicle or a ground surface. Preferably, the cooling body is essentially made from an electrically conductive material to block the electric field. In a beneficial embodiment, the cooling body is made from an electrically and thermally conductive material like aluminium.

Preferably, the shielding member extends along one or more sides of the first coil perpendicular to the first surface to condition the electromagnetic field in directions parallel to the first surface. In an advantageous embodiment an extending part of the shielding member, advantageously arranged substantially parallel to the one or more sides, comprises a further plurality of interconnected and spaced apart elongate electrically conductive strips.

According to another aspect of the present disclosure, a shielded inductive power transfer unit comprises a winding of a first coil arranged for power transfer and a shielding member arranged for covering at least a part of a first surface of the first coil in a direction of power transfer. The first coil defines a central area enclosed (i.e. completely surrounded) by the winding (or the first coil). The central area is essentially void of conductive shielding material. For instance, the shielding member does not cover the central area or only covers a part of the central area, although a grounding conductor (e.g. a trace or path) may be provided in the central region configured for connecting the shielding member to earth. Such a void in the shielding member may improve the power transfer efficiency and reduce the losses when transferring power from the first coil to a second coil, while shielding the environment from the electric field generated for such power transfer. Furthermore, it reduces the costs of the shield because less shielding material (e.g. copper) is used.

The shielding member may surround or enclose the central area, but preferably does not comprise a continuous loop of conductive material surrounding or enclosing the central area because this may lead to energy losses in the shield when the first coil is in use. Furthermore, these energy losses may be aggravated in situations where the alignment of the first coil and the second coil is inaccurate, for instance with respect to the overlap of the respective central areas (e.g. within the respective substantially horizontal planes comprising the first and the second coil). Therefore, an embodiment not comprising such loops of conductive material has the benefit that losses may be reduced and alignment requirements (e.g. precision) between the first and the second coil may be less critical for eddy current losses in the shield. Furthermore, it reduces the heat that would otherwise be generated in such a loop that may lead to a temperature development that may be deleterious to the coil and the support of the coil itself (e.g. between about 130 and 180 degrees Celsius or above), to the surrounding (electrical) components (e.g. between about 80 and 130 degrees Celsius or above) or to the health of for instance a person touching a surface of the energy transfer unit immediately after use (e.g. between about 50 and 80 degrees Celsius or above).

The shielding member comprises a plurality of shielding member portions each extending along (different) sections of the winding, wherein the shielding member portions are electrically isolated from one another. This prevents eddy currents from being induced. By way of example, the shielding member can comprise a plurality of elongate and spaced apart conductive strips, such as the conductive strips as described hereinabove or as described in the claims. Alternatively, any other suitable arrangement of conductive strips, can be used as well for the shielding member. The shielding member can otherwise be formed as described herein, e.g. as PCB implementation optionally arranged on a flexible support, such as conductive strips arranged on a flexible support.

Advantageously, the shielding member further extends along sides of the first coil perpendicular to the first surface.

Advantageously, the shielded inductive power transfer comprises a non-conductive magnetic material such as ferrite having a third surface exposed to a second surface of the first coil opposite to the first surface. Additionally or alternatively, the shielded inductive power transfer unit further comprises a cooling body arranged at a fourth surface of the non-conductive magnetic material opposite to the third surface.

### Brief description of the figures

Fig. 1 shows a schematic representation of a top view of a shielded inductive power transfer unit.
Figs. 2A, 2B, 2C and 2D show schematic representations of top views of embodiments of a shielded inductive power transfer unit comprising a circular first coil (see Fig. 2A and 2C) or a figure 8 first coil (see Fig. 2B and 2D).
Fig. 3A shows a schematic representation of sideview of two opposing shielded inductive power transfer units forming an inductive power transfer system. Fig. 3B shows a perspective view of a shielding member.
Fig. 4 shows trendlines of typical shield losses of a shielded inductive power transfer unit.

### Description of embodiments

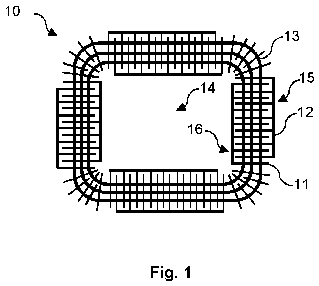

Referring to Fig. 1, the shielded inductive power transfer unit 10 comprises a coil 13 and a plurality of elongate electrically conductive strips 11. The conductive strips spanning at least a part of a winding of the first coil 13 and define a longitudinal axis, which is substantially perpendicular to the tangent of the part of the winding of the coil 13. A set 15 of conductive strips 11 is mutually electrically coupled through conductor 12 and forms a comb-like pattern. For instance, two such comb-like sets 15, 16 of conductive strips can be interleaved. Over a center region surrounded by the coil 13 there is a void 14 free of conductive material.

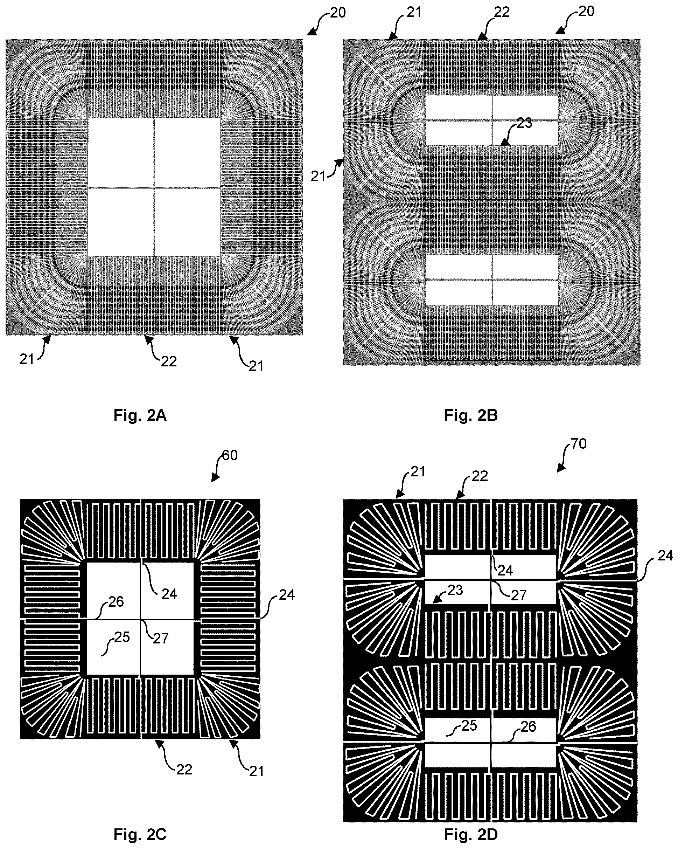

Referring to Figs. 2A-D, the shielding member can be implemented in a PCB, wherein the interleaved comb-like pattern 21, 22, 23 is arranged in a layer of electrically conductive material (shown in grey in Fig. 2A and 2B and shown in black in Fig. 2C and 2D) comprising a serpentine path of slits 24 (serpentine pattern shown in white).

Coils (rounded rectangular shapes shown in black in Fig. 2A and 2D) of inductive power transfer units 20 may have several topologies and shapes. For example, coils may have a single winding axis as shown in Fig 2A or two winding axes as shown in Fig. 2D. Furthermore, the windings of such coil may for example have a substantially circular shape, a (rounded) square shape or a (rounded) rectangular shape.

For a coil having a single winding axis as shown in Fig. 2A, the shielded inductive power transfer unit 20 may comprise a shielding member as shown in Fig. 2A or a shielding member 60 as shown in Fig. 2C, both comprising two alternating regions 21, 22 comprising different sets of interleaved combs, wherein each subsequent region 21, 22 can be electrically isolated from the next to reduce potential eddy currents from being induced. For instance, the embodiment shown in Fig. 2A comprises two curved regions 21 spanning the curved regions of the coil adjacent to a straight region 22 spanning the straight section of the coil. Alternatively, the embodiment shown in Fig 2C comprises one straight region 22 and one curved region 21 adjacent to a straight region 22. Nonetheless, these are just two examples of embodiments of a shielding member for a coil having a single winding axis and many variants of interruptions in the conductive material between subsequent regions are possible.

For a figure 8 coil as shown in Fig. 2B, the shielded inductive power transfer unit 20 may comprise a shielding member as shown in Fig. 2B or a shielding member 70 as shown in Fig. 2D, both comprising several regions 21, 22, 23 of sets of interleaved combs, wherein each subsequent region can be electrically isolated from the next to reduce potential eddy currents from being induced to flow between the first and the second region by a field generated by the first coil. In the center region of the figure 8 coil, where part of the windings of adjacent lobes run substantially in parallel, shielding member regions 23 or parts thereof covering either lobe may be electrically coupled to one another. The embodiments shown in Fig. 2B. and 2D comprise two adjacent curved regions 21 spanning the curved sections of the coil between two straight regions 22, 23 for the straight section of the coil. Furthermore, the embodiment shown in Fig. 2D shows that each straight section 22, 23 may be flanked by a curved region 21 and another straight region 22, 23. Nonetheless, these are just two examples of embodiments of a shielding member for a coil having two winding axes and many variants of interruptions in the conductive material between subsequent regions are possible.

Furthermore, the shielding member of the embodiments shown in Fig. 2A-D form at least one band comprising at least one void 25 in a central region. This central region may comprise at least one grounding conductor 26 for connecting the shielding member 60, 70 or regions 21, 22, 23 of the shielding member 60, 70 to ground or another fixed potential. Optionally, a junction 27 is present in the central region of the shielding member 60, 70 configured for jointly connecting the grounding conductors 26 of several regions 21, 22, 23 to ground or another fixed potential.

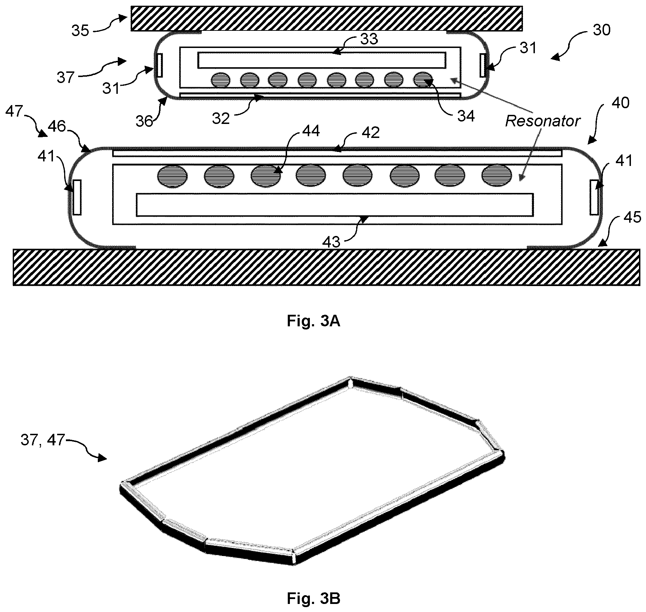

Referring to Fig. 3A, for power transfer a shielded power transfer unit 30 is placed on top of another shielded power transfer unit 40, preferably such that a winding axis of a first (resonator) coil 44 substantially aligns with a winding axis of a second (resonator) coil 34. The shielded power transfer units 30, 40 may each comprise a flexible shield 37, 47 respectively as shown in Fig. 3B, comprising for instance a flexible support 36, 46 to which are attached a plurality of PCB implementations 31, 32, 41, 42 of a shielding member according to the invention. A set of shielding members 31, 41 is typically located around the coils 34, 44 in planes parallel to the respective winding axis of the coils 34, 44. Another set of shielding members 32, 42 is typically located on top of or below the coil 34, 44, or in other words at the side of each coil 34, 44 configured for facing the other coil 34, 44. The other set of shielding member 32, 42 is typically configured in a plane perpendicular to the respective winding axis of the coils 34, 44.

The side of the coil 34, 44 opposite to the side configured for facing the other coil 34, 44, or in other words the side of the coil 34 facing the vehicle in case of the vehicle unit 30 or the side of the coil 44 facing the ground surface in case of the ground unit 40, may be provided with a cooling body 35, 45 for cooling the respective unit and/or providing ground. Furthermore, the same side of the coil may be provided with a ferrite body 33, 43 for shaping the electromagnetic field to improve energy transfer efficiency. In cases where a cooling body is present, such ferrite body 33, 43 will typically be located between opposing surfaces of the coil 34, 44 and the respective cooling body.

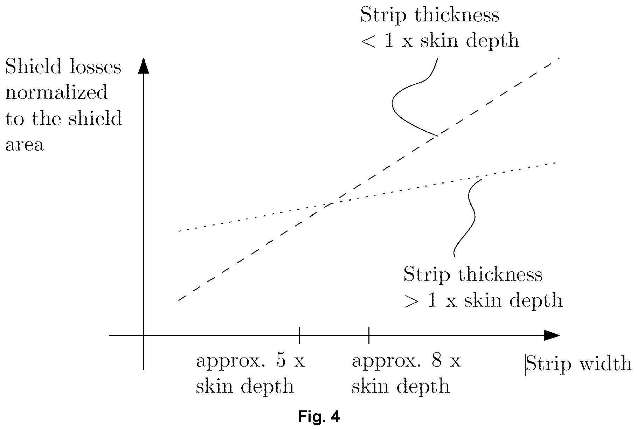

Referring to Fig. 4, the conductive elongated strips of the shielding member have a width and a thickness. Furthermore, the first coil is configured for generating a field inducing a current in the shield having a skin depth. From experimental data it was observed that the losses in the shielding member are reduced if the width of the elongated strips is at most 5 times the skin depth, preferably at most 2 times the skin depth in situations where the thickness of the elongated strips is at most one time the skin depth, preferably between a tenth and a fifth of the skin depth. Alternatively, the losses in the shielding member were reduced if the width of the elongated strips is at least 8 times the skin depth, preferably at least 10 times the skin depth in situations where the thickness of the elongated strips is at least one time the skin depth, preferably at least 2 times the skin depth.

## Claims

1. Shielded inductive power transfer unit (10, 20, 30, 40) comprising a winding of a first coil (13, 34, 44) arranged for power transfer and a shielding member (60, 70) arranged for covering at least a part of a first surface of the first coil (13, 34, 44) in a direction of power transfer, wherein the shielding member (60, 70) comprises a plurality of elongate electrically conductive strips (11) arranged for spanning an area all along the winding of the first coil (13, 34, 44), wherein the plurality of elongate conductive strips (11) comprises at least a first set (15) of elongate conductive strips being mutually electrically coupled and arranged for forming a pattern, such as a comb-like pattern, wherein each strip of the plurality of conductive strips (11) defines a longitudinal axis being substantially perpendicular to a local tangent of the winding of the first coil (13, 34, 44) along the winding direction, wherein the plurality of conductive strips (11) comprises a first region (21) spanning a first section of the winding along the winding and a second region (22) spanning a second section of the winding along the winding, and wherein the first region (21) and the second region (22) are electrically isolated from one another such that there is no current induced to flow between the first (21) and the second (22) region by a field generated by the first coil (13, 34, 44).

2. Shielded inductive power transfer unit according to claim 1, wherein the first coil (13, 34, 44) defines a substantially void central area (14) about the first winding axis, wherein a part of the shielding member (60, 70) overlapping the central area (14) is essentially void of electrically conductive shielding material.

3. Shielded inductive power transfer unit according to claim 1 or 2, wherein the plurality of elongate conductive strips (11) comprises at least a second set (16) of elongate conductive strips being mutually electrically coupled and arranged for forming a comb-like pattern.

4. Shielded inductive power transfer unit according to claim 3, wherein the conductive strips of the second set (16) interleave the conductive strips of the first set (15), for instance forming a set of interleaved combs.

5. Shielded inductive power transfer unit according to any one of the preceding claims, wherein the first coil is configured for generating a field inducing a current in the shielding member having a skin depth, wherein opposing edges of the conductive strip in a plane of the shielding member are arranged at a second distance from one another, and wherein opposing edges of the conductive strip in a direction substantially perpendicular to a plane of the shielding member are arranged at a third distance, wherein the second distance is at most 5 times the skin depth, preferably at most 2 times the skin depth and wherein the third distance is at most one time the skin depth, preferably at most a fifth of the skin depth, or wherein the second distance is at least 8 times the skin depth, preferably at least 10 times the skin depth and wherein the third distance is at least 1 time the skin depth, preferably at least 2 times the skin depth.

6. Shielded inductive power transfer unit according to any one of the preceding claims, wherein the shielding member is provided on a printed circuit board.

7. Shielded inductive power transfer unit according to any one of the preceding claims, wherein the plurality of conductive strips are connected to ground, preferably wherein the part of the shielding member comprises at least one grounding conductor (26) configured for connecting the shielding member to ground.

8. Shielded inductive power transfer unit according to any one of the preceding claims, wherein the shielding member is arranged substantially perpendicular to a first winding axis of the first coil.

9. Shielded inductive power transfer unit according to any one of the preceding claims, wherein the shielding member is free from a continuous electrically conductive loop, in particular a continuous electrically conductive loop being arranged substantially parallel to the first winding, in particular a continuous electrically conductive loop suitable for mutually inductively coupling the field generated by the first coil and thereby generating a temperature in the continuous electrically conductive loop of more than 180 degrees Celsius, preferably of more than 130 degrees Celsius, preferably of more than 80 degrees Celsius.

10. Shielded inductive power transfer unit according to any one of the preceding claims, wherein the shielding member comprises an extending part (36, 46) extending along sides of the first coil perpendicular to the first surface.

11. Shielded inductive power transfer unit according to claim 10, wherein the extending part of the shielding member comprises another plurality of second interconnected elongate electrically conductive strips as the plurality of second interconnected elongate electrically conductive strips recited in claims 1 to 7.

12. Shielded inductive power transfer unit according to any one of the preceding claims, comprising a non-conductive magnetic material (33, 43) such as ferrite having a third surface exposed to a second surface of the first coil opposite to the first surface, preferably configured for guiding a part of a field generated by first coil towards the part of the shielding member, in particular for guiding the part of the field configured for coupling a second coil for power transfer towards the part of the shielding member, preferably comprising a cooling body arranged at a fourth surface of the non-conductive magnetic material opposite to the third surface, preferably wherein the shielding member is electrically coupled to the cooling body, preferably for forming a substantially closed shield.

13. Shielded inductive power transfer unit according to any one of the preceding claims, wherein the winding of the first coil comprises alternating straight sections (22, 23) and curved sections (21), wherein the plurality of elongate electrically conductive strips have longitudinal axes being substantially perpendicular to a local tangent in the corresponding section.

14. Vehicle, comprising the shielded inductive power transfer unit (10, 20, 30, 40) according to any one of the preceding claims.

## Patentansprüche

1. Abgeschirmte induktive Leistungsübertragungseinheit (10, 20, 30, 40), umfassend eine Wicklung einer ersten Spule (13, 34, 44), die zur Leistungsübertragung angeordnet ist, und ein Abschirmelement (60, 70), das zum Abdecken mindestens eines Teils einer ersten Fläche der ersten Spule (13, 34, 44) in einer Richtung der Leistungsübertragung angeordnet ist, wobei das Abschirmelement (60, 70) eine Vielzahl von länglichen elektrisch leitenden Streifen (11) umfasst, die so angeordnet sind, dass sie einen Bereich entlang der gesamten Wicklung der ersten Spule (13, 34, 44) überspannen, wobei die Vielzahl von länglichen leitenden Streifen (11) mindestens einen ersten Satz (15) von länglichen leitenden Streifen umfasst, die elektrisch miteinander gekoppelt und so angeordnet sind, dass sie ein Muster bilden, wie z.B. ein kammartiges Muster, wobei jeder Streifen der Vielzahl von leitenden Streifen (11) eine Längsachse festlegt, die im Wesentlichen senkrecht zu einer lokalen Tangente der Wicklung der ersten Spule (13, 34, 44) entlang der Wicklungsrichtung ist, wobei die Vielzahl von leitenden Streifen (11) einen ersten Bereich (21) umfasst, der einen ersten Abschnitt der Wicklung entlang der Wicklung überspannt, und einen zweiten Bereich (22), der einen zweiten Abschnitt der Wicklung entlang der Wicklung überspannt, und wobei der erste Bereich (21) und der zweite Bereich (22) elektrisch voneinander isoliert sind, so dass kein Strom induziert wird, der zwischen dem ersten (21) und dem zweiten (22) Bereich durch ein Feld fließt, das von der ersten Spule (13, 34, 44) erzeugt wird.

2. Abgeschirmte induktive Leistungsübertragungseinheit nach Anspruch 1, wobei die erste Spule (13, 34, 44) einen im Wesentlichen leeren zentralen Bereich (14) um die erste Wicklungsachse festlegt, wobei ein Teil des Abschirmelements (60, 70), der den zentralen Bereich (14) überlappt, im Wesentlichen frei von elektrisch leitendem Abschirmmaterial ist.

3. Abgeschirmte induktive Leistungsübertragungseinheit nach Anspruch 1 oder 2, wobei die Vielzahl von länglichen leitenden Streifen (11) mindestens einen zweiten Satz (16) von länglichen leitenden Streifen umfasst, die elektrisch miteinander gekoppelt und zur Bildung eines kammartigen Musters angeordnet sind.

4. Abgeschirmte induktive Leistungsübertragungseinheit nach Anspruch 3, wobei die leitenden Streifen des zweiten Satzes (16) die leitenden Streifen des ersten Satzes (15) überlappen und beispielsweise einen Satz von überlappenden Kämmen bilden.

5. Abgeschirmte induktive Leistungsübertragungseinheit nach einem der vorhergehenden Ansprüche, wobei die erste Spule so ausgelegt ist, dass sie ein Feld erzeugt, das einen Strom in dem Abschirmelement mit einer Skin-Tiefe induziert, wobei gegenüberliegende Kanten des leitfähigen Streifens in einer Ebene des Abschirmelements in einem zweiten Abstand voneinander angeordnet sind, und wobei gegenüberliegende Kanten des leitfähigen Streifens in einer Richtung im Wesentlichen senkrecht zu einer Ebene des Abschirmelements in einem dritten Abstand angeordnet sind, wobei der zweite Abstand höchstens die 5-fache Skin-Tiefe, vorzugsweise höchstens die 2-fache Skin-Tiefe beträgt und wobei der dritte Abstand höchstens die einfache Skin-Tiefe, vorzugsweise höchstens ein Fünftel der Skin-Tiefe beträgt, oder wobei der zweite Abstand mindestens die 8-fache Skin-Tiefe, vorzugsweise mindestens die 10-fache Skin-Tiefe beträgt und wobei der dritte Abstand mindestens die 1-fache Skin-Tiefe, vorzugsweise mindestens die 2-fache Skin-Tiefe beträgt.

6. Abgeschirmte induktive Leistungsübertragungseinheit nach einem der vorhergehenden Ansprüche, wobei das Abschirmelement auf einer gedruckten Leiterplatte vorgesehen ist.

7. Abgeschirmte induktive Leistungsübertragungseinheit nach einem der vorhergehenden Ansprüche, wobei die mehreren leitenden Streifen mit Masse verbunden sind, wobei vorzugsweise der Teil des Abschirmelements mindestens einen Erdungsleiter (26) umfasst, der zum Verbinden des Abschirmelements mit Masse ausgelegt ist.

8. Abgeschirmte induktive Leistungsübertragungseinheit nach einem der vorangehenden Ansprüche, wobei das Abschirmelement im Wesentlichen senkrecht zu einer ersten Wicklungsachse der ersten Spule angeordnet ist.

9. Abgeschirmte induktive Leistungsübertragungseinheit nach einem der vorhergehenden Ansprüche, wobei das Abschirmelement frei von einer elektrisch leitenden Endlosschleife ist, insbesondere einer elektrisch leitenden Endlosschleife, die im Wesentlichen parallel zur ersten Wicklung angeordnet ist, insbesondere einer elektrisch leitenden Endlosschleife, die geeignet ist, das von der ersten Spule erzeugte Feld gegenseitig induktiv zu koppeln und dadurch eine Temperatur in der elektrisch leitenden Endlosschleife von mehr als 180 Grad Celsius, vorzugsweise von mehr als 130 Grad Celsius, vorzugsweise von mehr als 80 Grad Celsius zu erzeugen.

10. Abgeschirmte induktive Leistungsübertragungseinheit nach einem der vorhergehenden Ansprüche, wobei das Abschirmelement einen sich entlang der Seiten der ersten Spule senkrecht zur ersten Fläche erstreckenden Teil (36, 46) umfasst.

11. Abgeschirmte induktive Leistungsübertragungseinheit nach Anspruch 10, wobei der sich erstreckende Teil des Abschirmelements eine weitere Vielzahl von zweiten miteinander verbundenen länglichen elektrisch leitenden Streifen umfasst, wie die Vielzahl von zweiten miteinander verbundenen länglichen elektrisch leitenden Streifen, die in den Ansprüchen 1 bis 7 angeführt sind.

12. Abgeschirmte induktive Leistungsübertragungseinheit nach einem der vorhergehenden Ansprüche, umfassend ein nichtleitendes magnetisches Material (33, 43) wie Ferrit, das eine dritte Fläche aufweist, die einer zweiten, der ersten Fläche gegenüberliegenden Fläche der ersten Spule zugewandt ist, die vorzugsweise so ausgelegt ist, dass sie einen Teil eines von der ersten Spule erzeugten Feldes zu dem Teil des Abschirmelements führt, insbesondere zum Führen des Teils des Feldes, der zum Koppeln einer zweiten Spule zur Leistungsübertragung ausgelegt ist, zu dem Teil des Abschirmelements, vorzugsweise umfassend einen Kühlkörper, der an einer vierten Fläche des nichtleitenden magnetischen Materials gegenüber der dritten Fläche angeordnet ist, wobei das Abschirmelement vorzugsweise zur Bildung einer im Wesentlichen geschlossenen Abschirmung elektrisch mit dem Kühlkörper gekoppelt ist.

13. Abgeschirmte induktive Leistungsübertragungseinheit nach einem der vorhergehenden Ansprüche, wobei die Wicklung der ersten Spule abwechselnd gerade Abschnitte (22, 23) und gekrümmte Abschnitte (21) umfasst, wobei die Vielzahl von länglichen elektrisch leitenden Streifen Längsachsen aufweisen, die im Wesentlichen senkrecht zu einer lokalen Tangente in dem entsprechenden Abschnitt verlaufen.

14. Fahrzeug, umfassend die abgeschirmte induktive Leistungsübertragungseinheit (10, 20, 30, 40) nach einem der vorhergehenden Ansprüche.

## Revendications

1. Unité de transfert d'énergie inductive blindée (10, 20, 30, 40) comprenant un enroulement d'une première bobine (13, 34, 44) agencé pour le transfert d'énergie et un élément de blindage (60, 70) agencé pour recouvrir au moins une partie d'une première surface de la première bobine (13, 34, 44) dans une direction de transfert d'énergie, dans laquelle l'élément de blindage (60, 70) comprend une pluralité de bandes électriquement conductrices allongées (11) agencées pour s'étendre sur une zone tout le long de l'enroulement de la première bobine (13, 34, 44), dans laquelle la pluralité de bandes conductrices allongées (11) comprend au moins un premier ensemble (15) de bandes conductrices allongées étant mutuellement couplées électriquement et agencées pour former un motif, tel qu'un motif de type peigne, dans laquelle chaque bande de la pluralité de bandes conductrices (11) définit un axe longitudinal étant sensiblement perpendiculaire à une tangente locale de l'enroulement de la première bobine (13, 34, 44) le long de la direction d'enroulement, dans laquelle la pluralité de bandes conductrices (11) comprend une première région (21) s'étendant sur une première section de l'enroulement le long de l'enroulement et une seconde région (22) s'étendant sur une seconde section de l'enroulement le long de l'enroulement, et dans laquelle la première région (21) et la seconde région (22) sont isolées électriquement l'une de l'autre de telle sorte qu'aucun courant n'est induit à circuler entre la première (21) et la seconde (22) région par un champ généré par la première bobine (13, 34, 44).

2. Unité de transfert d'énergie inductive blindée selon la revendication 1, dans laquelle la première bobine (13, 34, 44) définit une zone centrale (14) sensiblement vide autour du premier axe d'enroulement, dans laquelle une partie de l'élément de blindage (60, 70) chevauchant la zone centrale (14) est essentiellement dépourvue de matériau de blindage électriquement conducteur.

3. Unité de transfert d'énergie inductive blindée selon la revendication 1 ou 2, dans laquelle la pluralité de bandes conductrices allongées (11) comprend au moins un second ensemble (16) de bandes conductrices allongées étant mutuellement couplées électriquement et agencées pour former un motif de type peigne.

4. Unité de transfert d'énergie inductive blindée selon la revendication 3, dans laquelle les bandes conductrices du second ensemble (16) intercalent les bandes conductrices du premier ensemble (15), formant par exemple un ensemble de peignes intercalés.

5. Unité de transfert d'énergie inductive blindée selon l'une quelconque des revendications précédentes, dans laquelle la première bobine est configurée pour générer un champ induisant un courant dans l'élément de blindage ayant une épaisseur de peau, dans lequel des bords opposés de la bande conductrice dans un plan de l'élément de blindage sont agencés à une deuxième distance l'un de l'autre, et dans lequel les bords opposés de la bande conductrice dans une direction sensiblement perpendiculaire à un plan de l'élément de blindage sont agencés à une troisième distance, dans laquelle la deuxième distance représente au plus 5 fois la épaisseur de peau, de préférence au plus 2 fois la épaisseur de peau et dans laquelle la troisième distance représente au plus une fois la épaisseur de peau, de préférence au plus un cinquième de la épaisseur de peau, ou dans laquelle la deuxième distance représente au moins 8 fois la épaisseur de peau, de préférence au moins 10 fois la épaisseur de peau et dans laquelle la troisième distance représente au moins 1 fois la épaisseur de peau, de préférence au moins 2 fois la épaisseur de peau.

6. Unité de transfert d'énergie inductive blindée selon l'une quelconque des revendications précédentes, dans laquelle l'élément de blindage est prévu sur une carte de circuit imprimé.

7. Unité de transfert d'énergie inductive blindée selon l'une quelconque des revendications précédentes, dans laquelle la pluralité de bandes conductrices est connectée à la terre, de préférence dans laquelle la partie de l'élément de blindage comprend au moins un conducteur de mise à la terre (26) configuré pour connecter l'élément de blindage à la terre.

8. Unité de transfert d'énergie inductive blindée selon l'une quelconque des revendications précédentes, dans laquelle l'élément de blindage est agencé sensiblement perpendiculairement à un premier axe d'enroulement de la première bobine.

9. Unité de transfert d'énergie inductive blindée selon l'une quelconque des revendications précédentes, dans laquelle l'élément de blindage est exempt d'une boucle continue électriquement conductrice, en particulier d'une boucle continue électriquement conductrice étant agencée sensiblement parallèlement au premier enroulement, en particulier d'une boucle continue électriquement conductrice appropriée pour coupler mutuellement de manière inductive le champ généré par la première bobine et générer ainsi une température dans la boucle continue électriquement conductrice de plus de 180 degrés Celsius, de préférence de plus de 130 degrés Celsius, de préférence de plus de 80 degrés Celsius.

10. Unité de transfert d'énergie inductive blindée selon l'une quelconque des revendications précédentes, dans laquelle l'élément de blindage comprend une partie de prolongement (36, 46) s'étendant le long des côtés de la première bobine perpendiculairement à la première surface.

11. Unité de transfert d'énergie inductive blindée selon la revendication 10, dans laquelle la partie de prolongement de l'élément de blindage comprend une autre pluralité de secondes bandes électriquement conductrices allongées interconnectées comme la pluralité de secondes bandes électriquement conductrices allongées interconnectées citées dans les revendications 1 à 7.

12. Unité de transfert d'énergie inductive blindée selon l'une quelconque des revendications précédentes, comprenant un matériau magnétique non conducteur (33, 43) tel que de la ferrite ayant une troisième surface exposée à une deuxième surface de la première bobine opposée à la première surface, configurée de préférence pour guider une partie d'un champ généré par la première bobine vers la partie de l'élément de blindage, en particulier pour guider la partie du champ configurée pour coupler une seconde bobine pour le transfert d'énergie vers la partie de l'élément de blindage, comprenant de préférence un corps de refroidissement agencé au niveau d'une quatrième surface du matériau magnétique non conducteur opposée à la troisième surface, de préférence dans laquelle l'élément de blindage est couplé électriquement au corps de refroidissement, de préférence pour former un blindage sensiblement fermé.

13. Unité de transfert d'énergie inductive blindée selon l'une quelconque des revendications précédentes, dans laquelle l'enroulement de la première bobine comprend des sections droites alternées (22, 23) et des sections courbes (21), dans laquelle la pluralité de bandes électriquement conductrices allongées présente des axes longitudinaux étant sensiblement perpendiculaires à une tangente locale dans la section correspondante.

14. Véhicule, comprenant l'unité de transfert d'énergie inductive blindée (10, 20, 30, 40) selon l'une quelconque des revendications précédentes.
